# EUROPEAN PATENT APPLICATION

(11) **EP 4 787 094 A1**
(43) Date of publication of application: **05.08.2026**
(21) Application number: 26155486.9
(22) Date of filing: 30.01.2026
(51) Int. Cl.: G05B 19/4065, G06N 3/02

(54) **TOOL WEAR MONITORING SYSTEM**

(30) Priority: 31.01.2025 IT 202500001833
(71) Applicant: Leonardo S.p.A., 00195 Roma (IT)
(72) Inventor: CHIRICO, Davide, 74023 GROTTAGLIE (TA) (IT); DI DONATO, Giustina, 74023 GROTTAGLIE (TA) (IT); GALLO, Nicola, 74023 GROTTAGLIE (TA) (IT); LEONE, Fabrizio, 74023 GROTTAGLIE (TA) (IT); METRANGOLO, Alessandra, 74023 GROTTAGLIE (TA) (IT)
(74) Representative: Studio Torta S.p.A.

(57) **Abstract**

Tool (14) wear status monitoring software (1) being loadable in, and executable by, electronic processing resources. The tool (14) wear status monitoring software (1) being designed to cause, when executed, said electronic processing resources to become configured to receive, from one or more sensors (11) arranged within a working environment (10), one or more acoustic signals indicative of acoustic quantities of a sound caused by the operation of a tool (14) within said working environment (10). In addition, the tool (14) wear status monitoring software (1) is designed to cause, when executed, said electronic processing resources to become configured to compute (block 4) a graphical representation (6), in particular a spectrogram, of the acoustic quantities of the sound caused by the operation of said tool (14) based on the received acoustic signals indicative of said acoustic quantities. The tool (14) wear status monitoring software (1) is further designed to cause, when executed, the electronic processing resources to become configured to determine a wear status (9) of the tool (14) by running a predictive neural model (7) on the computed graphical representation (6); the predictive neural model (7) being trained (block 8) to predict a wear status (9) to be associated to a graphical representation (6) of acoustic quantities of a sound. Furthermore, the tool (14) wear status monitoring software (1) is designed to cause, when executed, the electronic processing resources to become configured to provide an output based on the determined wear status (9) of the tool (14).

## Description

### CROSS-REFERENCE TO RELATED APPLICATIONS

This patent application claims priority from Italian patent application no. 102025000001833 filed on January 31, 2025, the entire disclosure of which is incorporated herein by reference.

### TECHNICAL FIELD OF THE INVENTION

The invention relates in general to the aerospace manufacturing sector. Specifically, it relates to a system for determining the condition of a tool. More precisely, the invention relates to a system designed for monitoring the wear status of a tool used for manufacturing aerospace components.

### STATE OF THE ART

As is known, especially in the aerospace industry, maintaining optimal tool conditions is crucial for ensuring high-quality production of components and minimizing processing failures. A malfunction in a critical precision component can lead to catastrophic outcomes, including loss of life and property. Excessive tool wear can result in severe issues such as chipping, cracking, and chattering, which can damage both the workpiece and the machine tool, leading to significant processing errors.

It is known that tool wear can occur through various mechanisms, each dependent on the characteristics of the tool material (in detail, harder materials are more wear-resistant) and the specific machining conditions (for example a stress condition between the tool and a workpiece). These mechanisms include abrasion, adhesion, diffusion, and fracture wear. Abrasion happens when a harder workpiece wears down a softer tool material, while adhesion can occur under high temperatures and pressures, forming micro-welds that tear material from the tool surface. Diffusion wear, particularly in steel tools, involves the migration of carbon atoms from the tool to the chip, reducing hardness and structural integrity. Fracture wear can result from structural damage, such as chipping or cracking, due to cyclic stresses or interrupted cutting conditions.

In particular, in drilling operations, tool wear manifests as a gradual and relatively extended process, contrasting with the nature of tool failure and cutting-edge breakage, which typically occur without prior indication. Although tool wear initiates upon the starting of drilling activities, its progression accelerates notably once the drill becomes dulled; in particular, a drill wear states can be classified into different wear stages (for example five different wear stages) as a function of tool life.

The longevity and performance of cutting or drilling tools play a critical role in ensuring optimal manufacturing processes. It is therefore crucial accurately measuring and monitoring tool wear for predicting when a tool will reach the end of its useful life, defined by its ability to perform its function effectively until it no longer produces workpieces of acceptable quality. This facilitates timely tool replacement and minimizes production interruptions.

It is widely acknowledged that the task of tool condition monitoring has always been carried out through the subjective evaluations of human operators, who assess the tool's condition based on the sound of the process, the appearance of the chips, or the sensation of cutting vibrations. However, this method is heavily dependent on the operator's experience and often proves inadequate for complex manufacturing processes due to its inefficiency and lack of precision. Consequently, the necessity of developing an effective tool condition monitoring system is evident, particularly given the potential repercussions of component failures in the aerospace industry.

Hence, the development of tool wear monitoring systems has been a key area of research and innovation within the aerospace manufacturing sector. Some of these monitoring systems are designed to employ direct techniques, such as visual inspection and physical measurement of wear; in detail, while these methods are straightforward and easy to apply, they necessitate halting the production process. Conversely, other systems utilize indirect techniques, which can estimate tool wear by analysing operational parameters like cutting forces, vibrations, and temperature in order to provide a more continuous and less intrusive assessment of the tool's wear condition.

It is further known that several machine learning models have been developed to analyse vast amounts of data collected during machining and manufacturing operations; wherein, said data include acoustic signals, vibrations, temperatures, and other operational variables that can indicate tool wear. These machine learning models have been trained on this data to recognize patterns and anomalies that precede tool degradation. Once trained, these models can accurately predict tool wear patterns. Moreover, the integration of artificial intelligence in tool condition monitoring enhances operational efficiency by automating the process, reducing reliance on subjective human assessments, and increasing prediction accuracy.

Furthermore, by capturing and analysing the acoustic signals emitted during tool operation, it is possible to detect subtle changes that indicate wear and potential failures before they occur. These acoustic signals, which manifest as high-frequency stress waves, can be processed using advanced signal analysis techniques to provide insights into tool condition. Some of these monitoring systems are configured to leverage machine learning models trained, on large datasets of acoustic recordings captured under various operational conditions, to classify inputted audio signals into different sound events and associate them with different stages of tool wear, enabling early detection of wear or potential failure.

It is known that CN 114 619 292 A discloses a milling cutter wear monitoring method based on wavelet noise reduction and an attention mechanism fused with a GRU network. Said milling cutter wear monitoring method comprises a step of collecting original machining signals in the machining process of a milling plane of a machine tool. The disclosed method further comprises steps of extracting a stable cutting process signal from an original machining signal and pre-processing the signal through wavelet noise reduction. The method also comprises a step of performing analysis and feature extraction on the signal to obtain a multi-dimensional feature matrix on a time sequence. Said method further comprises steps of establishing a tool wear prediction model based on a GRU network and fusing an attention mechanism for model training. The method finally comprises a step of monitoring the milling tool wear by adopting the trained tool wear prediction model.

In addition, the document US 2024/337561 A1 discloses an equipment malfunction diagnosis apparatus using a sound spectrogram image and a method therefor. In other words, the document discloses an invention that collects sound data through a sensor unit provided at one side of equipment, converts the collected sound data into a spectrogram image, and determines malfunction of the equipment and classifies a cause of the malfunction by performing machine learning using the spectrogram image as an input value. In this manner, the cause of the malfunction can be quickly and accurately identified when it is determined that there is a malfunction in the equipment, and a counterplan can be provided in response thereto.

Furthermore, US 2024/201651 A1 discloses a computer-implemented method for estimating component wear. According to said method, at least one clustering analysis may be applied to measurements taken during component use to identify clusters and generate alerts.

It is further known that US 2017/320182 A1 discloses a method and an apparatus for efficient use of a CNC machine shaping tool. The CNC machine shaping tool is efficiently used by monitoring human audible sound during shaping. A sound information set is created for a tool shaping a workpiece. Shaping sounds are recorded and sliced into short term units. A human operator assigns tool condition labels to each slice. Short term units are combined into midterm units. Noise is reduced by profiling. Midterm sound related features of time and frequency domains are extracted. Dimensionality is reduced by robust principal component analysis. The principal component set is balanced, e.g. by SMOTE. A classifier and principal components are selected. An information set of patterns of values of selected principal components for the tool is created. In an industrial setting, shaping sounds are recorded, noise reduced and select principal component vector values are compared to the tool condition labelled patterns of values in the information set to identify tool condition before deterioration.

### SUBJECT-MATTER AND SUMMARY OF THE INVENTION

The Applicant notes that known solutions can be improved.

Hence, the object of the invention is to provide an alternative tool wear monitoring software compared to the known solutions. The proposed solution offers significantly enhanced monitoring of tool wear during manufacturing processes. By leveraging advanced machine learning techniques, it ensures a more precise, efficient, and objective tool condition monitoring system, surpassing previous methods and meeting the high demands of aerospace manufacturing.

According to the invention, there are provided a tool wear monitoring software and a tool wear monitoring system as claimed in the appended claims.

In detail, there is provided a tool wear status monitoring software loadable in, and executable by, electronic processing resources, and being designed to cause, when executed, said electronic processing resources to become configured to receive, from one or more sensors arranged within a working environment, one or more acoustic signals indicative of acoustic quantities of a sound caused by the operation of a tool within said working environment. In addition, the tool wear status monitoring software is designed to cause, when executed, said electronic processing resources to become configured to compute a graphical representation, in particular a spectrogram, of the acoustic quantities of the sound caused by the operation of said tool based on the received acoustic signals indicative of said acoustic quantities. The tool wear status monitoring software is further designed to cause, when executed, the electronic processing resources to become configured to determine a wear status of the tool by running (or applying) a predictive neural model on the computed graphical representation; the predictive neural model being trained to predict a wear status to be associated to a graphical representation of acoustic quantities of a sound. Furthermore, the tool wear status monitoring software is designed to cause, when executed, the electronic processing resources to become configured to provide an output based on the determined wear status of the tool.

According to the invention, there is also provided a tool wear status monitoring system comprising electronic processing resources storing, and configured to execute, the tool wear status monitoring software.

### BRIEF DESCRIPTION OF THE DRAWINGS

Figure **1** schematically shows a block diagram of a tool wear monitoring system according to the present invention.
Figure **2** schematically shows a block diagram of a tool wear monitoring system's implemented algorithm according to a preferred embodiment of the present invention.
Figure **3** exemplary shows a working environment within which the tool wear monitoring system works according to the present invention.
Figure **4** exemplarily shows a graphical representation of the acoustic quantities of a sound, which can be analysed by the tool wear monitoring system to determine the wear status of a tool according to an aspect of the present invention.
Figure 5 shows examples of performance of the predictive neural model of the tool wear monitoring system in determining the wear status of a tool based on a graphical representation.

### DESCRIPTION OF PREFERRED EMBODIMENTS OF THE INVENTION

The invention will now be described in detail with reference to the accompanying figures, so as to allow a person skilled in the art to carry it out and use it. Possible changes to the embodiments described herein will be immediately evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the features described and claimed herein.

If not specifically defined otherwise, all technical and scientific terms have the meaning commonly used by people ordinarily skilled in the industry to which the invention belongs. In case of conflict, the description - including the definitions provided therein - is binding. Furthermore, the examples are provided by mere way of explanation and, as such, should not be considered as limiting.

In particular, the block diagrams included in the accompanying figures and described below should not be interpreted as representation of structural features, namely as constructive limits, but they should be regarded as representation of functional features, i.e. intrinsic properties of the devices defined by the obtained effects, namely as functional limits, which can be implemented in different manners, hence so as to protects the functionality thereof (possibility of functioning).

In order to make it easier for readers to understand the embodiments described herein, reference is made to some specific embodiments and a specific language will be used to describe them. The terms used in this document are aimed at exclusively describing particular examples and are not suited to limit the scope of protection of the invention.

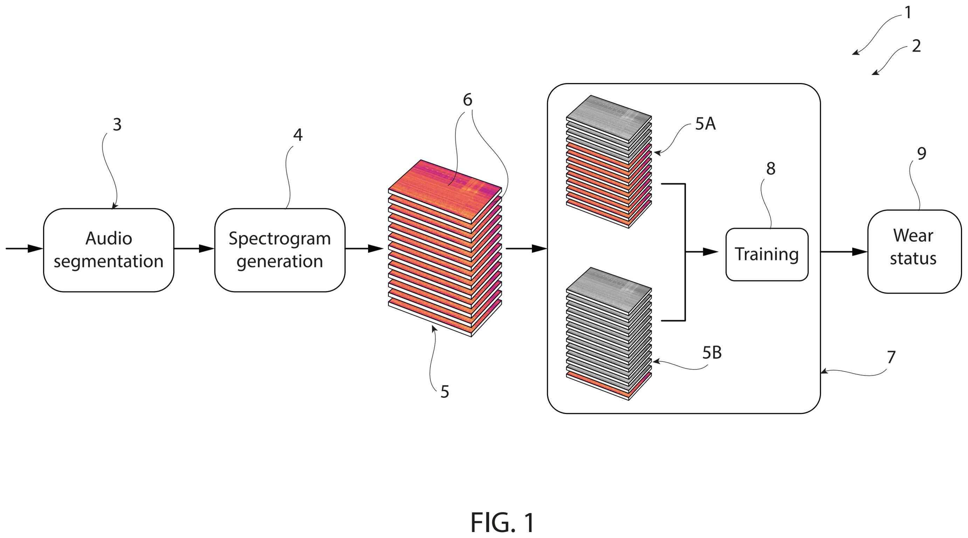

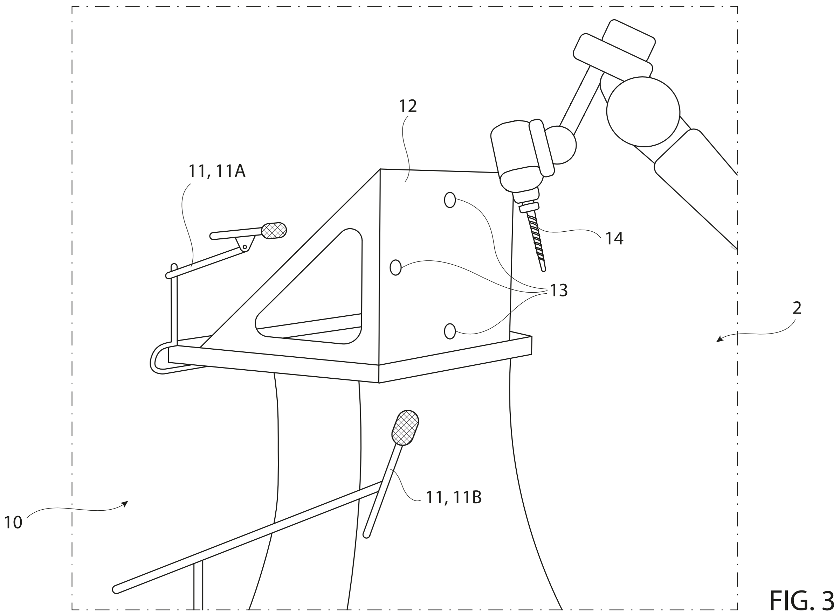

Figure **1** schematically shows a block diagram of a tool 14 wear monitoring system 2 according to the present invention. The tool 14 wear monitoring system 2 comprises electronic processing resources storing, and configured to execute, a tool 14 wear monitoring software 1, or tool 14 wear monitoring computer product 1, to compute (and conveniently monitor) a tool 14 wear status 9 based on acoustic signals measured within a working environment 10 during a manufacturing process, in particular an aerospace manufacturing process. Figure **3** exemplary shows a working environment 10 within which the tool 14 wear monitoring system 2 works according to the present invention.

According to a preferred embodiment of the present invention, said manufacturing process is a drilling process, and the tool 14 is configured to perform a drilling operation on a workpiece 12. In detail, it should be noted that, the term drilling operation refers to a distinct phase of operating with the tool 14, involving a cyclic penetration of the tool 14 (in detail the drill bit) into the workpiece 12, conveniently followed by retraction. In a way of example, said drilling operation is a peck drilling operation; wherein, peck drilling involves drilling a hole 13 in multiple incremental steps, where the drill bit periodically retracts or "pecks" from the hole 13 to break up and evacuate chips. The peck drilling technique is particularly beneficial when drilling deep holes 13 or through challenging materials, as it significantly aids in improving chip evacuation, reducing cutting forces, and preventing overheating of the drill bit.

In particular, said workpiece 12 is a workpiece 12 of metal or a workpiece 12 of a different material such as a composite material or a mixed structure.

The tool 14 wear monitoring software 1 is configured to cause, when executed, the electronic processing resources to become configured to perform the task of determining, and possibly monitoring, a wear status 9 of a corresponding tool 14 employed in a manufacturing process within the working environment 10 to determine the extent of a tool 14 wear.

In particular, the tool 14 wear monitoring software 1 is configured to cause, when executed, the electronic processing resources to become configured to perform a plurality of operations to determine the wear status 9 of a tool 14 employed during a manufacturing process; in detail, to prevent the production of holes 13 that are out of tolerance during manufacturing processes. In fact, in case of drilling operations, tool 14 wear significantly impacts the precision of holes 13 in the aerospace industry; as tools 14 wear, their sharpness diminishes, leading to increased hole 13 dimensions and irregular internal surfaces. Tool 14 wear compromises the geometric accuracy of holes 13, affecting their roundness and straightness. In the aerospace industry, out-of-tolerance holes 13 are a critical issue that can necessitate scrapping entire components, leading to significant economic losses. Comprehensive experimental measurements have been conducted to quantify the impact of tool 14 wear and establish a trend correlating hole 13 quality with the number of holes 13 drilled.

With regard to the tool 14 wear monitoring task, it is emphasized that what matters are the operations that must be implemented to realize such functionality and not the hardware and software architectures with which such operations are implemented; these could be implemented through a concentrated architecture, for example a single electronic device, or through a distributed cooperative architecture, comprising several electronic devices in communication and cooperating with each other, according to a proprietary logical architecture that the manufacturer of the tool 14 wear monitoring software 1 will decide to adopt.

The electronic processing resources are configured to receive from one or more sensors 11 arranged within the working environment 10, one or more acoustic signals indicative of acoustic quantities of a sound caused by the operation of a tool 14 within said working environment 10. Wherein, in particular, said acoustic quantities of the sound comprise at least the frequency, the amplitude and preferably the waveform of the sound caused by operating with the tool 14 within said working environment 10.

In particular, the electronic processing resources are configured to receive said acoustic signals, or optionally a digital audio reproducing the acoustic signals, from a sensory platform comprising said sensors 11 arranged within the working environment 10. According to an aspect of the present invention, the tool 14 wear monitoring system 2 comprises said sensors 11.

In particular, during a drilling operation (and possibly during a tool 14 operation different to a drilling operation), the workpiece 12 being operated on undergoes plastic deformation as the tool 14 penetrates it. This deformation generates transient elastic waves (to be measured by the sensors 11) due to the rapid release of energy from localized sources within the material, commonly referred to as acoustic emission. In detail, the potential sources of acoustic emissions during drilling processes encompass plastic deformation within the workpiece 12, frictional interactions between the tool's 14 flank face and the workpiece 12 leading to flank wear, frictional interactions between the tool's 14 rake face and the chip resulting in crater wear, collisions between the chip and the tool 14, tool 14 fracture, chip breakage, and other phenomena. In detail, as the tool 14 wear increase, there is a change in the way energy is transferred and dissipated, altering the acoustic properties of the sound produced. In fact, more specifically, relatively higher frequencies are generally associated with sharper cutting edges and lower levels of wear, while an increase in relatively lower frequencies may indicate a deterioration of the tool 14.

In detail, said sensory platform's sensors 11 are configured to measure, and to output, acoustic signals caused by operating with a tool 14 within the working environment 10; in more detail, to detect air-transmitted sound waves and convert them into electrical signals. In particular, said sensors 11 comprise microphones designed to record audio, particularly one or more acoustic signals, during a manufacturing process in which the tool 14 is employed. Preferably, said sensory platform's sensors 11 are professional microphones 11 specifically designed to detect acoustic waves generated by internal energy releases in materials, such as micro-fractures or deformations, often occurring in industrial processes or in structures under stress. In detail, the sensory platform includes sensors 11 designed to detect a very wide range of frequencies, often extending well beyond the audible range, up to tens or hundreds of kilohertz. This capability allows them to detect high-frequency phenomena associated with the internal physical processes of materials. Furthermore, whatever principle is used to convert sound into an electrical signal, this will be accompanied by the introduction of electrical noise; however, in high performance microphones, the self-noise is very low and can be ignored under most conditions. In addition, using these professional microphones 11 helps avoid the limitations of smartphone and others non-professional microphones and ensures more precise and consistent sound analysis, allowing for better comparisons especially between manual drilling and CNC machine drilling.

More specifically, the sensory platform's sensors 11 include one or more directional microphones 11A and/or one or more omni-directional microphones 11B. Wherein, directionality refers to how sensitive the microphone 11 is to sound from different directions. In particular, a directional microphone 11A is more sensitive to sounds coming from one direction than from others, while an omnidirectional microphone 11B is equally sensitive to sounds from all directions. According to an aspect of the present invention, the sensory platform comprises at least one directional microphone 11A; specifically, an ^{®} Eikon microphone, which is considered ideal for studio and home recording applications due to its optimized frequency response for instruments. In detail, each directional microphone 11A of the sensory platform is characterized by a different polar pattern; wherein, said polar pattern of a microphone, also known as its pickup pattern, refers to the directional sensitivity or response of the microphone to sound waves from different directions in relation to the microphone's diaphragm. According to said aspect of the present invention, the sensory platform also includes at least one omni-directional microphone 11B; for example, an ^{®} Omnitronic condenser microphone, known for its flat frequency response, true omnidirectional pattern, robust construction, and included accessories. In detail, the sensory platform includes a directional microphone 11A and an omnidirectional microphone 11B. Optionally, the omnidirectional and directional microphones 11B, 11A are arranged around a spindle, holding the tool 14, for accurately monitoring the tool 14 wear.

In detail, it is noted that the capacity of the sensory platform to effectively capture the sound emitted during a drilling operation while mitigating ambient noise is significantly enhanced by a specifically selected positioning of the sensory platform's sensors 11 within the working environment 10. Preferably, the sensory platform's directional microphone 11A is arranged behind a workpiece 12, specifically a drilling plate, on which the tool 14 can operate in order to focus the acoustic signals measurements on the tool 14 operation. Wherein, in particular, the external positioning of the directional microphone 11A, consistently oriented towards the area where the tool 14 operates, aims to capture pertinent information while minimizing external noise. Conversely, the sensory platform's omnidirectional microphone 11B is conveniently, but not necessarily, arranged beneath the tool 14 to facilitate the capture of a broader spectrum of working environment's 10 sounds while avoiding interference from noise caused by the tool's 14 operation. In more detail, the positioning of the microphones 11 was defined following numerous positioning attempts.

According to an aspect of the present invention, in order to ensure high-quality recordings and avoid distortion, the microphones 11 are designed to capture sound with a predefined gain. Wherein, gain refers to the level of amplification applied to the signal captured by the microphones 11. In particular, setting the gain accurately (possibly during a development phase) is to prevent the signal from exceeding a maximum level manageable by the recording equipment, which would cause clipping; wherein, clipping cuts off the audio signal at the highest allowable limit, resulting in a harsh and distorted sound. To avoid this, the microphones 11 should be conveniently adjusted to balance the signal strength, capturing a clear sound without causing clipping. In a way of example, an effective method is to set the gain so that the peak volume of the audio does not exceed a predefined clipping threshold; in particular, the gain nearly reaches but does not exceed the predefined clipping threshold. In detail, this precise adjustment allows to ensure high-quality audio, free from distortions and unwanted noise.

Optionally, said sensory platform further comprises one or more vibration sensors 11 arranged within the working environment 10.

Optionally, the electronic processing resources are configured to perform a normalization of the received acoustic signals. In particular, the electronic processing resources are configured to execute a normalization algorithm on the received acoustic signals in order to obtain normalized acoustic signals. In detail, this allows to prevent clipping and/or distortion and to maintain the acoustic signals at a consistent level through the recording or processing. In particular, the normalization algorithm is designed to cause, when executed, the electronic processing resources to become configured to adjust the amplitude of the acoustic signals to a specific (possibly predefined in a development phase) amplitude level. In more detail, the normalization algorithm includes the process of scaling the acoustic signals to ensure that the peak amplitude of the signals reaches a specified level, such as zero dBFS (decibels full scale). This ensures that the highest amplitude of the acoustic signal is at the maximum level that can be represented in the digital audio format, without introducing any distortion or clipping. This process may optionally involve adjusting the gain of the signal to align the loudest part with the specific amplitude level, thereby preserving the integrity of the audio data.

In detail, the electronic processing resources, or the sensory platform, are configured to convert said acoustic signals into a digital audio; in more detail, a digital audio in the Waveform Audio File Format (WAV). In particular, the selection of WAV was driven by the need for impeccable audio fidelity and flexibility, particularly as it supports extensive manipulation and integration within several coding environments, a common requirement in advanced audio processing tasks.

The electronic processing resources are further configured to determine or detect a number of different tools 14 that have been operating within the working environment 10 based on the received acoustic signals. In detail, the electronic processing resources are configured to determine one or more tool-specific acoustic signals, associated with corresponding tools 14 operating within the working environment 10, by performing a source separation technique (here not illustrated) on the received acoustic signals (optionally, on the digital audio's acoustic signals). In a way of example, the electronic processing resources are configured to separate the acoustic signals (or the digital audio determined based on said acoustic signals) into said tool-specific acoustic signals by using the independent component analysis (ICA). In a different way of example, the electronic processing resources are configured to separate the acoustic signals into said tool-specific acoustic signals by applying a non-negative matrix factorization (NMF) on said acoustic signals. Each of said tool-specific acoustic signals being indicative of the acoustic quantities of the sound caused by the operation of the tool 14 associated thereto.

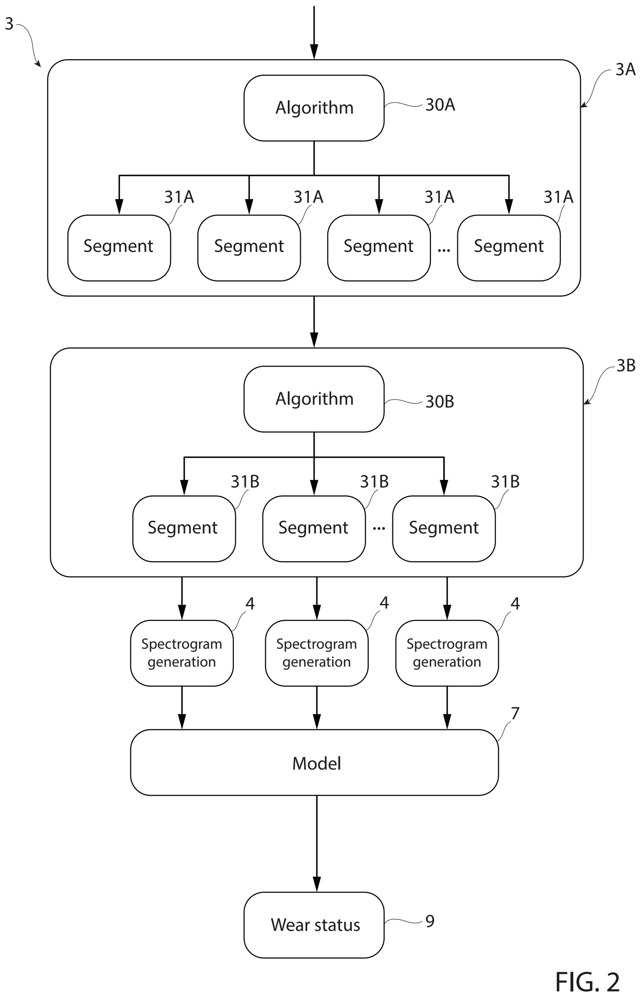

Figure 2 schematically shows a block diagram of a tool 14 wear monitoring system's 2 implemented algorithm 3 according to a preferred embodiment of the present invention.

In detail, according to said preferred embodiment of the present invention, the electronic processing resources are further configured to determine (block 3B), by executing an audio segmentation algorithm 3 on the received acoustic signals (or on the digital audio storing said acoustic signals), one or more drilling sound segments 31B, or acoustic signals' portions or windows, of said acoustic signals. Said drilling sound segments 31B being associated with different corresponding drilling operations of the tool 14 and identifying different sounds caused by said associated drilling operations of the tool 14. Preferably, each of these drilling sound segments 31B is associated with a different drilling operation of the tool 14 and identifies a sound caused by said associated drilling operation of the tool 14.

In detail, each determined drilling sound segment 31B is also associated with the hole 13 obtained by performing the drilling operation associated with said determined drilling sound segment 31B. Furthermore, each determined drilling sound segment 31B is conveniently represented or identified by a plurality of values indicating the acoustic quantities of the sound corresponding to said drilling sound segment 31B and recorded within a time interval. In the time domain, each second of the acquired digital audio consists of different audio samples, corresponding to the sampling frequency chosen to accurately represent the audio signal up to half the sampling frequency, as mandated by Nyquist's theorem; this means that each second of audio is represented by different values.

Optionally, each drilling sound segment 31B is also associated with data indicative of the time interval during which the sound represented by said drilling sound segment 31B was recorded. The electronic processing resources are optionally configured to create one or more folders, stored in electronic storing resources (internal or external to the tool 14 wear monitoring system 2), where the drilling sound segments 31B are saved or stored. Where, the electronic processing resources are conveniently configured to name each folder with a textual content indicating the order of extraction of said drilling sound segments 31B; in particular, each textual content comprising an incremental counter.

In particular, said audio segmentation algorithm 3 is designed to determine, or detect, (block 3B) and isolate drilling sound segments 31B, each associated with a different corresponding drilling operation of the tool 14 and identifying the sound caused by said associated drilling operation of the tool 14. In particular, said audio segmentation algorithm 3 is designed considering the distinctive characteristics of audio during the drilling process, such as frequency, intensity, and temporal variations.

In detail, the audio segmentation algorithm 3 is designed to cause, when executed, said electronic processing resources to become configured to determine (block 3A) several provisional segments 31A of the received acoustic signals. In more detail, the audio segmentation algorithm 3 is designed to cause, when executed, said electronic processing resources to become configured to segment (block 30A) the received acoustic signals, or the audio representing or storing said received acoustic signals, into several provisional segments 31A of the acoustic signals. In addition, the electronic processing resources are preferably configured to segment (block 30A), or divide, the received acoustic signals in such a way that the resulting provisional segments 31A, when combined, reconstruct the original audio or acoustic signals, ensuring that no data from the received acoustic signals is excluded. More specifically, the electronic processing resources are configured to segment (block 30A) the received acoustic signals into provisional segments 31A of a predefined length; wherein, the length of a provisional segment 31A corresponds to the length, or duration, of the time interval associated with said provisional segment 31A. For example, the electronic processing resources are configured to segment (block 30A) the received acoustic signals into provisional segments 31A lasting 1 second. Optionally, the electronic processing resources are configured to segment (block 30A) the received acoustic signals into provisional segments 31A based on a predefined sampling rate; in a way of example, 44100 Hz sampling rate.

According to an aspect of the preferred embodiment of the present invention, the electronic processing resources are further configured to execute an algorithm (in detail the normalization algorithm) on the acoustic signals' values to emphasize peaks (or sound events) within the acoustic signals. In particular, for each of the provisional segments 31A, the electronic processing resources are configured to perform said normalization on said provisional segment's 31A values (in detail, on the acoustic signals' values of the provisional segment 31A). Alternatively, the electronic processing resources are configured to normalize, by means of said normalization algorithm, the values of the acoustic signals before executing the audio segmentation algorithm 3 on them.

In detail, the electronic processing resources, by executing the normalization algorithm, are configured to adjust the acoustic signals' values, in particular of each of the provisional segments 31A, by applying a thresholding algorithm to said acoustic signals' values. In more detail, said normalization technique includes performing the steps of determining all the acoustic signals' values inferior to a predefine threshold, and of setting said determined values to 0 in order to ensure that all the values are positive. Said predefine threshold preferably corresponds to 0.

In addition, the electronic processing resources, when the audio segmentation algorithm 3 is executed, become configured to determine (here not illustrated), for each of said provisional segments 31A, that a sound activity condition is or is not satisfied based on the acoustic signals' values of said provisional segment 31A. In detail, in order to determine that said sound activity condition is or is not satisfied, the electronic processing resources are further configured to compute, for each of said provisional segments 31A, a sound activity value associated to said provisional segment 31A based on, in detail by summing, its acoustic signals' values; preferably by summing its adjusted (and positive) acoustic signals' values. Wherein, in detail, the sound activity value corresponds to the sum of the acoustic signals' values.

According to a first aspect of the present invention, the electronic processing resources are further configured to determine that said sound activity condition is satisfied for a provisional segment 31A if the sound activity value associated with the provisional segment 31A is included in a list of top (or high) sound activity values. In detail, the electronic processing resources are further configured to form the list of top sound activity values by selecting, from the sound activity values, the highest values of all the sound activity values, and by adding them to the list of top sound activity values. In more detail, the electronic processing resources are configured to sort the computed sound activity values in descending order and then to extract multiple (in a way of example a predefined number of) highest sound activity values from this sorted list, starting from the top and proceeding downwards, in order to add in the list of top sound activity values the extracted sound activity values. In more detail, the sound activity values list being an outcome of a predictive neural model.

According to a second aspect of the present invention, the electronic processing resources are further configured to determine that said sound activity condition is or is not satisfied for a provisional segment 31A by comparing said sound activity value with a sound activity threshold. In detail, if said sound activity value is determined to be equal or higher to said sound activity threshold, the electronic processing resources are configured to determine that the sound activity condition is satisfied. Conveniently, if said sound activity value is determined to be inferior to said sound activity threshold, the electronic processing resources are configured to determine that the sound activity condition is not satisfied.

Optionally, the electronic processing resources are configured to compute the sound activity threshold based on the computed sound activity values associated to the provisional segments 31A. In a way of example, the electronic processing resources are configured to compute the sound activity threshold as the average of the determined top sound activity values. Alternatively, the sound activity threshold is a predefined value.

In particular, the provisional segments 31A for which the sound activity condition is determined to be satisfied are the provisional segments 31A representing the peaks of the audio (or with relatively high sound activity), as it is assumed that silent or lower provisional segments 31A have lower sound activity values compared to those with sound peaks. Specifically, adjusting the provisional segments' 31A values through normalization is preferred because it enables the precise identification of peaks, in detail of the provisional segments 31A for which the sound activity condition is determined to be satisfied, by summing positive values in each provisional segment 31A, which are conveniently assumed to represent higher-than-normal values. In detail, the provisional segments 31A for which the sound activity condition is determined to be satisfied are identified as the peaks and, hence, are associated with drilling operations of the tool 14.

In addition, the electronic processing resources are configured to determine (block 3B) the drilling sound segments 31B, associated with different drilling operations of the tool 14, based on the provisional segments 31A for which the sound activity condition is determined to be satisfied.

In particular, the audio segmentation algorithm 3 is further designed to cause, when executed, said electronic processing resources to become configured to perform, for each of said provisional segments 31A for which the sound activity condition is determined to be satisfied, the operation of selecting a number (preferably more than two) of different contiguous provisional segments 31A to be merged; said selected contiguous provisional segments 31A at least comprising the provisional segment 31A for which the sound activity condition is determined to be satisfied. In detail, said number of provisional segments 31A to be merged selected from the provisional segments 31A is a predefined number. In detail, if the provisional segments 31A last 1 second, the number of provisional segments 31A to be merged corresponds to a predefined desired length of the drilling sound segment 31B. For example, if the desired length is 13 seconds, the number of provisional segments 31A to be merged will be 13.

In more detail, the electronic processing resources are configured to select as provisional segments 31A to be merged the provisional segment 31A for which the sound activity condition is determined to be satisfied, and the provisional segments 31A contiguous to said provisional segment 31A for which the sound activity condition is determined to be satisfied, and possibly to select (iteratively or recursively) additional provisional segments 31A, contiguous to previously selected provisional segments 31A, until the number of provisional segments 31A to be merged is reached.

According to an aspect of the present invention, the electronic processing resources are configured to determine (in detail to form) a list of provisional segments 31A to be merged by selecting contiguous provisional segments 31A, comprising the provisional segment 31A for which the sound activity condition is determined to be satisfied. In detail, the electronic processing resources are configured to add said selected provisional segments 31A to be merged into the list of provisional segments 31A to be merged. In more detail, the list of provisional segments 31A to be merged includes at least two provisional segments 31A contiguous to the provisional segment 31A for which the sound activity condition is determined to be satisfied. Preferably, the electronic processing resources are configured to select the provisional segments 31A to be merged, in order to obtain one or more drilling sound segments 31B on which perform the inference, in such a way that the provisional segment 31A for which the sound activity condition is determined to be satisfied is centred in the list of provisional segments 31A to be merged. In a way of example, the list of provisional segments 31A to be merged consists of four provisional segments 31A before the provisional segment 31A for which the sound activity condition is determined to be satisfied, and five provisional segments 31A after said segment. According to a different example, the list of provisional segments 31A to be merged consists of ten provisional segments 31A before the provisional segment 31A for which the sound activity condition is determined to be satisfied, and three provisional segments 31A after said segment.

In particular, said electronic processing are configured to select, as provisional segments 31A to be merged, a number of different provisional segments 31A for which a selection condition is determined to be satisfied. In detail, the selection condition is determined to be satisfied for a provisional segment 31A if said provisional segment 31A is the provisional segment 31A for which the sound activity condition is determined to be satisfied, or it is determined to be contiguous to the provisional segment 31A for which the sound activity condition is determined to be satisfied, or if said provisional segment 31A is determined to be contiguous to one of the selected (in detail previously selected) provisional segments 31A to be merged. Preferably, the electronic processing resources are configured to determine a position (in a way of example, in the list of provisional segments 31A to be merged) associated with each provisional segment 31A, and are configured to determine that the selection condition is satisfied for a provisional segment 31A also based on the position associated with said provisional segment 31A with respect to the position associated with the provisional segment 31A for which the sound activity condition is determined to be satisfied. In detail, the electronic processing resources are configured to determine that the selection condition is satisfied for a provisional segment 31A if the position associated with the provisional segment 31A is such that, when inserted into the list of provisional segments 31A to be merged, the difference between the number of provisional segments 31A before the provisional segment 31A for which the sound activity condition is determined to be satisfied and the number of provisional segments 31A after that segment is inferior to a threshold; conversely, the selection condition is conveniently determined to be not satisfied if this difference is greater than or equal to the threshold. Wherein, optionally, said threshold is defined or predefined to ensure that a provisional segment 31A is inserted into the list of provisional segments 31A to be merged only if the provisional segment 31A for which the sound activity condition is determined to be satisfied is centred (or can be considered centred) in the list after insertion.

Alternatively, the electronic processing resources are optionally configured to determine that the selection condition is satisfied for a provisional segment 31A if the position associated with the provisional segment 31A is such that, when inserted into the list of provisional segments 31A to be merged, both the number of provisional segments 31A before the provisional segment 31A for which the sound activity condition is determined to be satisfied and the number of provisional segments 31A after that segment are both higher than a predefined threshold. In more detail, the electronic processing resources are configured to determine that the selection condition is satisfied if the number of provisional segments 31A before the provisional segment 31A for which the sound activity condition is determined to be satisfied is higher than a first threshold, and the number of provisional segments 31A after that provisional segment 31A for which the sound activity condition is determined to be satisfied is higher than a second and different threshold.

Furthermore, the audio segmentation algorithm 3 is designed to cause, when executed, said electronic processing resources to become further configured to perform, for each of said provisional segments 31A for which the sound activity condition is determined to be satisfied, the operation of computing (block 30B) a drilling sound segment 31B, associated with a drilling operation of the tool 14, by merging (or by concatenate) said selected provisional segments 31A to be merged; in detail, the provisional segments 31A included in the list of the provisional segments 31A to be merged. In particular, the drilling sound segment 31B is the result of this merging operation (block 30B). The electronic processing resources are possibly configured to store said drilling sound segments 31B in the electronic storing resources (possibly, in the folders created to store said drilling sound segments 31B) and to associate said drilling sound segments 31B with identifiers conveniently identifying the position or order of said drilling sound segments 31B.

The electronic processing resources are further configured to compute (block 4) a graphical representation 6, in particular a spectrogram, of the acoustic quantities of the sound caused by the operation of said tool 14 based on the received acoustic signals indicative of said acoustic quantities. Preferably, the electronic processing resources are configured to compute a spectrogram, or a sequence of spectra, indicative and representative of the acoustic quantities of the sound caused by the operation of said tool 14 based on the received acoustic signals. In a way of example, the electronic processing resources are configured to compute said spectrogram by executing a Fourier Transform, in particular a Short Time Fourier Transform, on said received acoustic signals. In detail, the Fourier Transform is a mathematical tool 14 that converts a signal from its original form, which changes over time, into a form that shows how much of the signal is made up of different frequencies.

In particular, the spectrogram is a graph that shows how the power of the various frequencies varies over time, providing valuable insights into the dynamics of acoustic signals being analysed. In a way of example, a spectrogram is displayed as a two-dimensional heatmap, where the x-axis represents time, the y-axis represents frequency, and the colour or intensity of each point on the graph indicates the amplitude or power of a particular frequency at a given time. Wherein, the variations in colour intensity within said spectrogram provide a detailed account of how different frequencies behave over the duration of the signal.

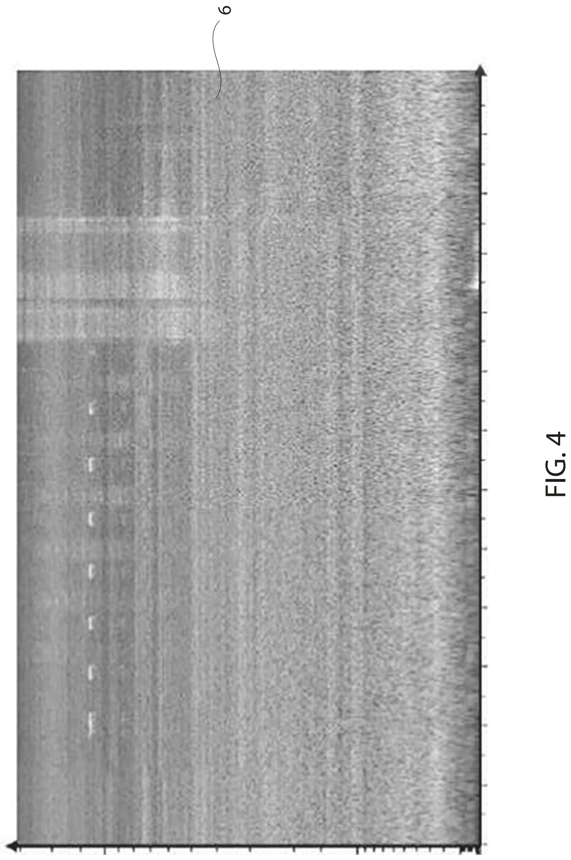

Preferably, the computed graphical representation 6 of the acoustic quantities of the sound caused by the operation of the tool 14 is a black-and-white spectrogram representing said acoustic quantities of the sound. In detail, Figure 4 exemplarily shows a graphical representation 6 (in detail a black-and-white spectrogram) of the acoustic quantities of a sound, which can be analysed by the tool 14 wear monitoring system 2 to determine the wear status 9 of a tool 14 according to an aspect of the present invention.

According to a first aspect of the present invention, the computed graphical representation 6 is a colour spectrogram, and the electronic processing resources are configured to convert the computed graphical representation 6 into a black-and-white spectrogram. According to a second and different aspect of the present invention, the electronic processing resources are configured to directly compute a black-and-white spectrogram based on the received acoustic signals, in particular without first computing a colour spectrogram.

In fact, it is determined that, although colour spectrograms can be visually informative for human observation, the colour channels do not add significant value for the wear status 9 analysis and instead introduce unnecessary complexity to the computation. In particular, by analysing black-and-white spectrograms, the electronic processing resources are able to focus solely on the intensity variations rather than colour variations, which simplifies the input data and reduces the required computational load.

In particular, according to the preferred embodiment of the present invention, the electronic processing resources are configured to compute (block 4), for each of the determined drilling sound segments 31B, a distinct graphical representation 6 (in detail a spectrogram, in more detail a black-and-white spectrogram) of the acoustic quantities of the sound caused by the tool's 14 drilling operation associated to said drilling sound segment 31B based on said drilling sound segment 31B. In detail, the electronic processing resources are configured to compute, or generate, multiple graphical representations.

According to the preferred embodiment of the present invention, the electronic processing resources are conveniently configured to compute, for each of said determined drilling sound segments 31B, the spectrogram of the acoustic quantities of the sound caused by the tool's 14 drilling operation associated to said drilling sound segment 31B by executing the Fourier transform on said drilling sound segment 31B; in particular, to identify the maximum frequency and its power spectral density (PSD) within a specified frequency range.

According to an aspect of the present invention, the electronic processing resources are configured to adjust (or preprocess) the drilling sound segment 31B, before computing (block 4) the corresponding graphical representation 6, by executing a preprocessing algorithm designed to determine and isolate the operation noise (in detail the drilling noise) from ambient sounds. In detail, said preprocessing algorithm is further designed to cause, when executed, the electronic processing resources to become further configured to determine if a peak is noise, and to delete, or eliminate, said peak if it is determined to be a noise. In more detail, said preprocessing algorithm includes the step of eliminating sparse peaks determined to be noise, in order to enhance the quality of the analysis. In more detail, the preprocessing algorithm is configured to execute a smoothing or denoising technique to filter out noise.

In more detail, the electronic processing resources are configured to compute, for each of the determined drilling sound segments 31B, a peak frequency of said drilling sound segment 31B and its corresponding power spectral density (PSD). More in particular, the electronic processing resources are configured to identify two main peak frequencies during the analysis, for example at 11500 Hz and 16000 Hz. Optionally, the electronic processing resources are configured to determine the first frequency peak by examining the data in a first frequency range, for example between 10 kHz to 12 kHz, while are configured to find the second peak frequency in a second frequency range (in detail different from the first frequency range), for example between 12 kHz and 18 kHz. In detail, this analytical approach allows for a detailed examination of the sound signatures associated with mechanical drilling, facilitating a deeper understanding of the process and its acoustic impact. The electronic processing resources are possibly configured to organize the data regarding the peak frequencies and their respective power spectral densities (PSDs) for these two main frequencies into two separate datasets. In particular, the electronic processing resources are further configured to compute (block 4), for each of said determined drilling sound segments 31B, the corresponding graphical representation 6 based on said determined peak frequencies and conveniently also based on their respective power spectral densities. In detail, this procedure provides a detailed representation 6 of the spectral characteristics of individual drill holes 13, establishing a solid foundation for further analysis and interpretation of the audio data.

According to a different and optional embodiment of the present invention, the electronic processing resources are configured to compute (block 4) one graphical representation 6 of the acoustic quantities of the sound caused by the operation of said tool 14 by executing the Fourier transform directly on the received acoustic signals indicative of said acoustic quantities.

According to the embodiment of the present invention wherein it is performed the source separation technique, the electronic processing resources are further configured to compute (block 4), for each of said different tools 14, a tool-specific graphical representation 6 (for example by executing the Fourier transform) of the acoustic quantities of the sound caused by the operation of said tool 14 based on the tool-specific acoustic signals indicative of the acoustic quantities of the sound caused by the operation of said tool 14. Preferably, the electronic processing resources are further configured to compute (block 4), for each of said different tools 14, one or several tool-specific graphical representations 6 of the acoustic quantities of the sounds caused by the operation of said tool 14 based on corresponding drilling sound segments 31B determined based on the tool-specific acoustic signals indicative of the acoustic quantities of the sound(s) caused by the operations of said tool 14. In detail, for each of said different tools 14, the electronic processing resources are further configured to determine (block 3B) a number of drilling sound segments 31B based on the tool-specific acoustic signals indicative of the acoustic quantities of the sound(s) caused by the operations of said tool 14; and for each of said determined drilling sound segments 31B, the electronic processing resources are further configured to compute (block 4) a tool-specific graphical representations 6 based on said drilling sound segment 31B.

In addition, the electronic processing resources are configured to determine (conveniently in real time) a wear status 9 of the tool 14 by running, or by applying, a predictive neural model 7 on a (preferably each) computed graphical representation 6; the predictive neural model 7 being trained (block 8) to predict a wear status 9 to be associated to a graphical representation 6 of acoustic quantities of a sound. In detail, the electronic processing resources are configured to input the computed graphical representation 6 into said predictive neural model 7, and to receive the wear status 9 of the tool 14 from the predictive neural model 7 once it has determined said wear status 9 of the tool 14.

According to the preferred embodiment of the present invention, the electronic processing resources are configured to determine the wear status 9 of the tool 14 based on the computed distinct graphical representations 6 computed based on the drilling operation segments. In particular, the electronic processing resources are configured to determine the wear status 9 of the tool 14 by applying (in detail by running an inference) the predictive neural model 7 on said computed distinct graphical representations 6; in detail, on each of said distinct graphical representations 6.

Preferably, the electronic processing resources are configured to determine, for each of said computed distinct graphical representations 6, a distinct tool 14 wear status 9 associated with said computed graphical representation 6; and to compute a final tool 14 wear status 9 based on the distinct tool 14 wear statuses 9 determined based on the computed distinct graphical representations 6. In detail, the electronic processing resources are configured to compute the final tool 14 wear status 9 by combining, in more detail by merging, the distinct tool 14 wear statuses 9. In more detail, the electronic processing resources are configured to compute the final tool 14 wear status 9 by computing the average of the distinct tool 14 wear statuses 9. Possibly, the electronic processing resources are configured to compute the final tool 14 wear status 9 by performing a weighted average of the distinct tool 14 wear statuses 9. In detail, for each of said distinct tool 14 wear statuses 9, the electronic processing resources are configured to weight (or adjust) said distinct tool 14 wear status 9 based on the data indicative of the time interval during which the sound represented by said segment was recorded; and subsequently to compute the average of said distinct weighted tool 14 wear statuses 9.

In particular, the electronic processing resources are configured to determine said final tool 14 wear status 9 based on said average, or weighted average, of the distinct tool 14 wear statuses 9. In detail, the final tool 14 wear status 9 corresponds to the average, or weighted average, of the distinct tool 14 wear statuses 9. Alternatively, the final tool 14 wear status 9 is a textual label, and the electronic processing resources are configured to determine said final tool 14 wear status 9 by performing a mapping between the average, or weighted average, of the distinct tool 14 wear statuses 9 and the corresponding textual label.

The electronic processing resources are further configured to determine, for each of said different determined tools 14, a wear status 9 of said tool 14 by applying (or running) the predictive neural model 7 on the computed graphical representation(s) 6 of the acoustic quantities of the sound caused by the operation(s) of said tool 14. In detail, the electronic processing resources are further configured to determine, for each of said different determined tools 14, the wear status 9 of said tool 14 by applying (or running) the predictive neural model 7 on the computed tool-specific graphical representation(s) 6 of the acoustic quantities of the sound caused by the operation(s) of said specific tool 14.

The electronic processing resources are configured to implement, in particular receive and/or execute, said predictive neural model 7 trained (block 8) to predict a wear status 9 to be associated to a graphical representation 6 of acoustic quantities of a sound received in input. In particular, the predictive neural model 7 is trained (block 8) to distinguish and classify differences in graphical representations 6 in order to determine the wear status 9 of a tool 14. In detail, the predictive neural model 7 is trained (block 8) to classify the tool 14 wear status 9 to be associated to an inputted graphical representation 6 based on said inputted graphical representation 6. Optionally, the predictive neural model 7 is trained (block 8) to classify the tool 14 wear status 9 to be associated to a plurality of inputted graphical representations 6 based on said inputted graphical representations 6. In a way of example, the predictive neural model 7 is trained (block 8) for 50 epochs.

In detail, the predictive neural model 7 comprises one or more convolutional neural networks (for example based on LeNet5) trained (block 8) to extract features from a graphical representation 6 received in input, and to determine a tool's 14 wear status 9, to be associated to said graphical representation 6, based on the extracted features. In more detail, the convolutional neural networks of the predictive neural model 7 are configured to extract a variety of features from the inputted graphical representation 6, which are classified into predefined categories; where the categories, or classes, are the possible wear statuses. The convolutional neural networks are then optionally configured to determine the tool's 14 wear status 9 by comparing these extracted features with features from other categories; wherein, said features from other categories are conveniently determined based on the category of the extracted features.

In more detail, the predictive neural model's 7 convolutional neural networks are trained (block 8) on several different graphical representations 6 of acoustic quantities of sounds caused by operating with one or more tools 14 within one or more working environments 10. More specifically, the predictive neural model's 7 convolutional neural networks are trained (block 8) on a training dataset 5 comprising several different graphical representations 6, of acoustic quantities of sounds caused by operating with tools 14 within one or more working environments 10, labelled with corresponding wear statuses 9. Conveniently, the training dataset 5 is heterogeneous in terms of working environments 10 where the sounds, represented by the dataset's graphical representations, are recorded. Additionally, optionally, the training dataset 5 is also heterogeneous in terms of the tools 14 used to perform drilling operations and compute the corresponding graphical representations.

Alternatively, according to an aspect of the present invention, the predictive neural model 7 comprises several tool-specific predictive neural models; each of said tool-specific predictive neural models being associated to a different tool's 14 type (with respect to the other ones), and being trained on graphical representations of acoustic quantities of sounds caused by the operation of a (one or more) tool 14 of (in particular classifiable with) the type associated to said tool-specific predictive neural model, to become configured to perform the task of determining a wear status 9 of said tool 14. In particular, each of the several tool-specific predictive neural models is a convolutional neural network, of the predictive neural model 7, trained on a dataset of graphical representations of acoustic quantities of sounds caused by the operation of one or more tools 14 of the type associated to said tool-specific predictive neural model. In particular, the several tool-specific predictive neural models are trained on different tool-specific datasets. In detail, it should be noted that, the term convolutional neural network hereinafter may refer to a tool-specific predictive neural model.

In addition, the predictive neural model 7 comprises an orchestrator model configured to select one of the several tool-specific predictive neural models based on a graphical representation 6 received in input and representing acoustic quantities of a sound caused by the operation of a tool 14. In particular, the orchestrator model comprises a classifier, in detail a classifier neural network (in detail a convolutional neural network), trained to determine, or classify, the tool's 14 type (or class) based on the graphical representation 6 received in input. Wherein, in detail, the classifier neural network is trained on a dataset of different graphical representations 6, of acoustic quantities of sounds caused by the operation of tools 14, labelled or associated with corresponding tool's 14 types (or classes). More specifically, a tool's 14 type is a content, for example a textual one, indicating the type of the tool 14 that caused the sound represented by the graphical representation 6 associated to said tool's 14 type. In detail, the orchestrator model is further configured to select one of the several tool-specific predictive neural models based on the determined tool's 14 type. In more detail, the orchestrator model is configured to select the tool-specific predictive neural model associated with the determined tool's 14 type. Wherein, in detail, each tool-specific predictive neural model is associated with a different tool's 14 type.

The orchestrator model is further configured to apply said selected tool-specific predictive neural model on the graphical representation 6 received in input in order to determine the wear status 9 of the tool 14. In particular, the orchestrator model is configured to input the graphical representation 6 into the selected tool-specific predictive neural model and to receive the output (comprising the determined wear status 9 of the tool 14) of said selected tool-specific predictive neural model, in detail after the latter completes its inference on the graphical representation 6.

More specifically, each convolutional neural network of the predictive neural model 7 is trained (block 8) by adjusting its weights through the execution of a training algorithm 8 on the training dataset 5. Wherein, preferably, said training algorithm 8 is a backpropagation algorithm; more specifically, it also utilizes a gradient descent method.

In particular, the electronic processing resources are further configured to execute one or more preprocessing techniques on the graphical representations 6 to be inputted to the convolutional neural networks of the predictive neural model 7, whether these graphical representations 6 are for training (block 8) the predictive neural model 7 or for performing inference with the predictive neural model 7. Additionally, the electronic processing resources are configured to augment the training dataset 5, in order to obtain new data for training (block 8) the predictive neural model 7, by executing a data augmentation algorithm on the training dataset 5. In addition, the electronic processing resources are possibly configured to execute one or more among normalization, scaling, centralization, and data whitening techniques or algorithms on the graphical representations 6 to be inputted.

It should be noted that, hereinafter, reference is made to a plurality of convolutional neural networks; however, this should not be considered as limiting for the present invention, as the predictive neural model 7 may comprise a single convolutional neural network.

In detail, the electronic processing resources are configured to train (block 8) said convolutional neural networks as long as an improvement condition is satisfied; once this improvement condition is no longer satisfied, the training stops. More specifically, the electronic processing resources are configured to determine whether said improvement condition is satisfied by comparing a performance threshold with a value indicative of the performance of the predictive neural model 7 (in particular the accuracy of the predictive neural model 7). Furthermore, the electronic processing resources are configured to determine that said improvement condition is satisfied if the value indicative of the performance of the predictive neural model 7 is inferior to the performance threshold. Specifically, the electronic processing resources are configured to determine the value indicative of the performance of the predictive neural model 7 as the predictive neural model's 7 output comprises said value. Preferably, the different graphical representations 6 included in the training dataset 5 are spectrograms, specifically black-and-white spectrograms, representative of acoustic quantities of sounds; in particular of sounds caused by operating within working environments 10 with one or more tools 14.

According to one aspect of the present invention, the predictive neural model 7 comprises one or more Siamese neural networks, which focus on learning embeddings that place similar classes or concepts close together, enabling the model to learn semantic similarity.

In addition, preferably, the training dataset 5 comprises a plurality, in particular more than five thousand, graphical representations 6 associated to corresponding drilling operations; in detail, peck drilling operations. It should be noted that, hereinafter, when reference is made to a drilling operation, the same application or function performed by means of the tool 14 wear monitoring software 1 can be adapted to any other operation different from the drilling operation. Nevertheless, it should be noted that the present invention works particularly well for drilling operations.

In detail, the training dataset 5 includes graphical representations 6 of acoustic quantities of sounds recorded from operations involving multiple drill bits on various workpieces 12. Each sound recording is preferably obtained from the operation of a single drill bit on a specific workpiece 12, with the training dataset 5 being collected by capturing sounds from different drill bits (for example three different drill bits). Preferably, the training dataset 5 is collected by performing different operations with different tool 14 drills; in more detail, with tool 14 drills of different types and/or sizes. In detail, the training dataset 5 includes a minimum of 1500 samples for each drill bit, ensuring comprehensive coverage and representation of the drilling operations.

In detail, the workpieces 12 on which the tool 14 operates for collecting the training dataset 5 are made of aluminium alloy; wherein for example each of these workpieces 12 measure 500x300 mm. In detail, despite the fact that this solution can be applied on different materials, this study specifically focuses on using Aluminium 2024 T351 for drilling operations to explore its behaviour under machining conditions typical in the aerospace sector. In more detail, this alloy is known for its high yield strength, significantly higher than many other aluminium alloys, which is paramount for critical aerospace components where performance under pressure and fatigue resistance are crucial. However, said alloy is less corrosion-resistant and more prone to cracking compared to other aluminium alloys, particularly in environments that induce stress-corrosion; this necessitates meticulous surface treatment and protective coatings to enhance its durability and performance longevity.

In particular, the training dataset 5 is collected by performing operations with a CNC (Computer Numerical Control) machine configured to control the operation of one or more tools 14, preferably drills. In particular, the training dataset 5 is further collected by varying (in detail for considering different parameters' combinations) the configuration of one or more parameters, such as the drill rotational speed, the feed rate (in particular, how quickly the drill bit advances into the workpiece 12 during drilling), the drill depth, the tool 14 offset (in detail the distance between the centre of the drill bit and the centre of the spindle in the CNC drilling machine), coolant/lubrication settings (especially if the operation is a peck drilling one), the rotational speed of a spindle holding the drill bit, and tool 14 change selection and positioning settings.

In detail, each of said graphical representations 6 of the training dataset 5 is labelled, and associate, with a corresponding wear status 9; in more detail, with a data indicative of said wear status 9.

In particular, a wear status 9 is indicative of the extent of tool 14 wear; in more detail, it can be a textual content or a value (in particular a numeric value) indicative of a specific wear stage of a tool 14. In particular, the different wear stages or statuses comprise an initial wear stage, a slight wear stage (namely a regular wear stage), a moderate wear stage (in particular, a micro breakage stage of wear), a severe wear stage (namely a fast wear stage), and a worn-out stage or tool 14 breakage stage. Possibly, the wear status 9 corresponds to a textual content identifying a corresponding wear stage.

According to a first aspect of the present invention, in order to form the training dataset 5, the labels are defined for each graphical representation 6 of the training dataset 5 by directly analysing the corresponding graphical representation 6 and the features of the acoustic quantities represented therein. In a way of example, an operator (specifically a human operator) associates the training dataset's 5 graphical representations 6 with corresponding wear statuses 9 determined by comparing the represented acoustic quantities with a plurality of different acoustic quantities indicative of various wear stages. In detail, said different acoustic quantities indicative of various wear stages are determined by identifying, and conveniently analysing, trends and conveniently a baseline in several different graphical representations 6 included into a predefined initial set. In addition, a sampling method can be adopted, measuring a predefined number of samples of that initial set, to identify the trends in the tool 14 operations. In more detail, by identifying trends in several different graphical representations 6 included in the predefined initial set, different ranges corresponding to various wear stages are determined. In particular, if the acoustic quantities of a graphical representation 6 fall within one of these ranges, said graphical representation 6 is labelled based on the wear stage corresponding to that range. In particular, if the acoustic quantities of a graphical representation 6 fall within one of these ranges, the graphical representation 6 is labelled with a wear status 9 indicative of said wear stage corresponding to that range.

According to a second aspect of the present invention, in order to form the training dataset 5, the labels are defined (in particular by an operator) for each graphical representation 6 of the training dataset 5 by conducting measurements on the tool 14 under analysis, and eventually (but preferably) on the hole 13 obtained by operating with the tool 14, to perform a detailed assessment. Optionally, said labels are defined by determining the degradation in tool 14 performance and/or its effects on quality of production over time. In particular, each graphical representation 6 of the training dataset 5 is labelled based on the characteristics, or features, of the hole 13 obtained by the tool 14 operation corresponding to said graphical representation 6. In detail, several predefined tolerance ranges are defined to correspond to specific labels. In particular, a label is assigned (in particular by an operator) to a graphical representation 6 based on which predefined tolerance range the diameter of the hole 13, drilled by the tool 14, falls into. In more detail, the exit burr, surface roughness and diameter measurements are conducted (in particular by an operator) for computing a quality factor of the holes 13 made with the tool 14 in order to identify, and to associate to the corresponding graphical representation 6, the wear status 9 of the tool 14 based on, in more detail to be indicative of, the computed quality factor. For example, if the diameter of the drilled hole 13 falls within the range of 4.85mm to 5.13mm, a label indicating a slight wear stage is assigned to the graphical representation.

Preferably, the electronic processing resources are configured to partition the training dataset 5 into a training 5A, a testing (not illustrated), and a validation subset 5B of the dataset 5, and to train (block 8) the predictive neural model's 7 convolutional neural networks on said training 5A, testing, and validation 5B subsets. This partition of the training dataset 5 is a known technique that allows an evaluation of the predictive neural model's 7 performance and ensures that it generalizes well to new, unseen data.

In detail, each of these convolution neural networks comprises a plurality of fully connected layers trained (block 8) to classify the extracted features, by associating specific patterns (determined on said extracted features) with the predetermined labels. Conveniently, throughout each of said convolutional neural networks, non-linear activation functions (such as sigmoid or ReLu) are applied after convolutional and fully connected layers; this introduces non-linearity for learning complex patterns. In detail, said convolutional neural networks also implement average pooling for subsampling, which reduces the spatial resolution of the feature maps. Preferably, said convolutional neural networks implement pooling layers configured to reduce the feature maps' dimensions.

According to an aspect of the present invention, the predictive neural model's 7 convolutional neural networks are pre-trained on generic datasets to perform one or more generic computer vision tasks. In addition, said predictive neural model's 7 convolutional neural networks are fine-tuned (block 8) to become configured to perform the task of determining a tool's 14 wear status 9 based on a graphical representation 6 by adjusting their weights based on several different graphical representations 6, of acoustic quantities of sounds caused by operating with tools 14 within one or more working environments 10, labelled with corresponding wear statuses 9. In particular, the predictive neural model's 7 convolutional neural networks are fine-tuned (block 8) by adjusting their weights based on the training dataset 5.

In detail, said predictive neural model's 7 convolutional neural networks are pre-trained on large generic datasets for generic image recognition tasks in order to become configured to recognize a plurality of generic features and patterns in images. In particular, said pre-trained convolutional neural networks serve as a robust foundation for a variety of computer vision tasks. In more detail, the predictive neural model 7 is pre-trained to become configured to extract a variety of different generic features from images and to recognize a variety of different generic patterns; this ability leads to a significant advantage. Furthermore, another crucial advantage of using a pre-trained model, in order to perform a fine-tuning, is the reduction of overfitting. In detail, this pre-training helps prevent overfitting when the predictive neural model 7 is fine-tuned (block 8), as the predictive neural model's 7 weights are already optimized to some extent.

In detail, the electronic processing resources are configured to pre-train the convolutional neural networks of the predictive neural model 7 on large generic datasets for generic image recognition tasks before fine-tuning (block 8) said convolutional neural networks based on the training dataset 5. Alternatively, the electronic processing resources are configured to receive said pre-trained convolutional neural networks, more specifically at least the weights (or weight configuration) of said pre-trained convolutional neural networks, and to fine-tune (block 8) said received pre-trained convolutional neural networks.

In particular, the electronic processing resources are configured to execute a transfer learning technique for using said pre-trained networks as a starting point to fine-tune (block 8) said convolutional neural networks to become configured to perform the task of determining a tool's 14 wear status 9. In detail, by leveraging said pre-trained networks, substantial time and computational resources can be conserved, which would otherwise be necessary to train (block 8) the convolution neural networks from scratch. Indeed, it is observed that fine-tuning (block 8) a pre-trained convolutional neural network on the training dataset 5, specifically tailored to the task of determining a tool's 14 wear status 9, demands significantly less data, computational resources, and time compared to training the same network from scratch.

According to an aspect of the present invention, the electronic processing resources are configured to fine-tune (block 8) the pre-trained predictive neural model 7 based on a model optimization algorithm.

Optionally, in order to fine-tune (block 8) the pre-trained convolutional neural networks, the electronic processing resources are configured to determine optimal predictive neural model's 7 hyperparameters, in detail optimal convolutional neural networks' hyperparameters, to be set during training (block 8). In detail, the electronic processing resources are configured to determine the optimal predictive neural model's 7 hyperparameters by adjusting current predictive neural model's 7 hyperparameters (optionally random hyperparameters) based on the model optimization algorithm. In fact, an effective optimization of the hyperparameters of the predictive neural model 7 not only enhances the accuracy and efficiency of the predictive neural model 7 but also ensures its robustness and generalization to new data. Alternatively, in order to fine-tune (block 8) the pre-trained convolutional neural networks, the electronic processing resources are configured to receive the optimal predictive neural model's 7 hyperparameters to be set during training (block 8); wherein, in detail, said hyperparameters are determined by one or more human operators.

In detail, the hyperparameters of the predictive neural model 7 comprises a parameter indicative of the batch size of the predictive neural model 7. Wherein, batch size refers to the number of training samples used in one training iteration by the predictive neural model 7. Adjusting the batch size affects memory usage, computational efficiency, and training stability. Larger batch sizes provide more accurate and stable gradient estimates due to averaging over more samples, which can lead to smoother convergence and better utilization of hardware resources. This often results in faster training times; however, larger batch sizes require more memory and can be computationally expensive. In more detail, the batch size for the predictive neural model's 7 training (block 8) is set to a value that is a power of 2.

Possibly, the hyperparameters of the predictive neural model 7 comprises a parameter indicative of the number of filters in the convolutional neural networks of the predictive neural model 7. In particular, increasing the number of filters allows the convolutional neural networks to capture more complex features from input data; however, an excessive number of filters increases the risk of overfitting, and the computational and memory requirements needed for training (block 8) the predictive neural model 7.

In addition, the hyperparameters of the predictive neural model 7 optionally comprises a parameter indicative of the filter dimensions in the convolutional neural networks of the predictive neural model 7. In detail, using filters that are too small may result in the convolutional neural network missing broader contextual information, leading to a lack of understanding of the overall structure; conversely, using filters that are too large may overlook fine details, causing the convolutional neural network to miss critical subtle patterns. In particular, in image recognition tasks, employing a combination of small and large filters allows for the effective capture of both detailed and broad features. For example, the model optimization algorithm is designed to cause, when executed, the electronic processing resources to become configured to compute, for each filter of the network, its dimension based on a data indicative of temporal and frequency resolution needed to accurately capture the characteristics of the sound; in detail, a filter dimension leads to consequences in the accuracy of capturing the sound's characteristics.

In addition, the hyperparameters of the predictive neural model 7 preferably comprises a parameter indicative of the learning rate for the convolutional neural networks of the predictive neural model 7.

Conveniently, the electronic processing resources are configured to execute one or more regularization algorithms during the predictive neural model's 7 training (block 8) in order to prevent overfitting. In particular, the electronic processing resources are configured to apply, as regularization algorithm, weight decay to the predictive neural model's 7 training (block 8).

Furthermore, the predictive neural model's 7 convolutional neural networks conveniently comprise a dropout layer designed to randomly drop neurons and their connections (and weights) from said convolutional neural networks during training (block 8). In particular, at each training (block 8) iteration, a specified fraction of neurons is removed from the convolutional neural networks, forcing the predictive neural model 7 to learn redundant representations and thus making it more robust. In detail, by introducing this randomness, the dropout layer effectively reduces the risk of overfitting and improves the predictive neural model's 7 ability to generalize to new data.

In addition, one of said regularization algorithms to be executed during the predictive neural model's 7 training (block 8), in detail an early stopping algorithm, includes the step of stopping, or interrupting, the training (block 8) of the predictive neural model 7 if a value indicative of the performance of the predictive neural model 7 on a training dataset's 5 subset (preferably the validation 5B subset) is determined to be inferior to a performance threshold for a predetermined number of epochs. This approach allows to save computational resources by avoiding unnecessary epochs and stops training (block 8) at the optimal point, ensuring the predictive neural model 7 is not overly complex.

In addition, the electronic processing resources are configured to execute, during the predictive neural model's 7 training (block 8), a different regularization algorithm designed to reduce the learning rate parameter defined for the predictive neural model 7, in detail by a predefined reducing factor, if a plateau condition is determined to be satisfied during the predictive neural model's 7 training (block 8). In detail, the electronic processing resources are configured to determine that the plateau condition is satisfied during the predictive neural model's 7 training (block 8) if the value indicative of the predictive neural model's 7 performance falls within a performance interval, or range, for a predefined number of epochs. More in detail, the electronic processing resources determine that the plateau condition is satisfied if there is no significant improvement in the model's performance for the predefined number of epochs. This strategy allows for finer adjustments in the weights, facilitating potentially better predictive neural model 7 performance; in fact, when the learning rate is higher than a learning rate threshold, the predictive neural model 7 may overshoot the optimal parameters, leading to oscillations or divergence. In detail, this algorithm ensures that the predictive neural model 7 does not stop improving due to a learning rate that is too high and enhances the likelihood of achieving a better final performance; this is particularly beneficial in fine-tuning (block 8) the predictive neural model 7.

The predictive neural model 7 is optionally trained (block 8) to determine a number of different tools 14 that have been operating within a working environment 10 based on an inputted graphical representation 6 of the acoustic quantities of a sound; and to extract, for each of said different tools 14, features identifying a sound caused by the operation of said tool 14 within said working environment 10 from the inputted graphical representation 6. In addition, according to said embodiment of the present invention, said predictive neural model 7 is trained (block 8) to determine, for each of said tools 14, a wear status 9 of said tool 14 based on the extracted features identifying the sound caused by the operation of said tool 14 within the working environment 10.

According to an aspect of the present invention, the electronic processing resources are further configured to implement an audio classification neural model, distinct to the predictive neural model 7, pre-trained on a dataset of diverse audio recordings to classify audio signals into different sound events. In detail, it should be noted that the audio classification model can be of any known type and trained using any methodology and audio recordings, and therefore is not described in detail.

In addition, the electronic processing resources are further configured to run the predictive neural model 7 on the computed graphical representation 6 to determine a predictive neural model's 7 output and run (in detail concurrently run) the audio classification neural model on the received acoustic signals to determine an audio classification neural model's output. In particular, according to said aspect of the present invention, the electronic processing resources are further configured to determine the wear status 9 of the tool 14 based on the predictive neural model's 7 output and the audio classification neural model's output. In detail, the electronic processing resources are further configured to obtain the tool 14 wear status 9 by merging the predictive neural model's 7 output and the audio classification neural model's output; wherein, said outputs are in the same formats. In a way of example, the tool 14 wear status 9 is the average between the predictive neural model's 7 output and the audio classification neural model's output.

Alternatively, according to said aspect of the present invention, the electronic processing resources are configured to select the wear status 9 of the tool 14 between the predictive neural model's 7 output and the audio classification neural model's output. In particular, the electronic processing resources are configured to receive a predictive neural model's 7 confidence index indicative of the confidence of the predictive neural model 7 in providing the output, and to receive a classification neural model's confidence index indicative of the confidence of the classification neural model in providing the output. In addition, the electronic processing resources are configured to select the tool 14 wear status 9 between said outputs based on the predictive neural model's 7 confidence index and the classification neural model's confidence index. In detail, the electronic processing resources are configured to select, as tool 14 wear status 9, the predictive neural model's 7 output if the predictive neural model's 7 confidence index is higher than the classification neural model's confidence index; otherwise, to select the classification neural model's output.

Furthermore, after determining the tool 14 wear status 9, the electronic processing resources are configured to provide an output based on the determined wear status 9 of the tool 14. Optionally, said output comprises the determined wear status 9 of the tool 14. The electronic processing resources are configured to provide an output based on the determined wear statuses 9 of the determined tools 14, or to provide multiple outputs based on the determined wear statuses 9 of the determined tools 14.

According to an aspect of the present invention, the electronic processing resources are configured to provide, or generate, a warning alert (for a human operator) if a warning condition is determined to be satisfied. In detail, the output, of the electronic processing resources, is the warning alert. Specifically, this warning alert facilitates pre-emptive intervention to prevent unexpected failures, thereby ensuring the continuity of the production process. Early detection of tool 14 wear also enables corrective actions to be taken before issues escalate, preventing damage to the components being manufactured.

In detail, the electronic processing resources are configured to determine that said warning condition is or is not satisfied based on the wear status 9 of the tool 14(s).

In addition, the electronic processing resources are conveniently configured to control the operability of the tool 14 based on said wear status 9. In detail, the output, of the electronic processing resources, comprises one or more controls to control the operability of the tool 14 based on said wear status 9. In particular, the electronic processing resources are configured to adjust tool 14 operation parameters (wherein the output comprises said operation parameters); in detail, one or more between speed, feed rate and depth of cut or drill. In addition, electronic processing resources are preferably configured to adjust how the tool 14 operates to match changes in the material being worked on, the condition of the tool 14 (in detail its wear status 9), and optionally other factors; in detail, this flexibility ensures the longest tool 14 life under different conditions.

In addition, the electronic processing resources are configured, by employing the predictive neural model 7, to continuously monitor the wear status 9 of a tool 14.

The present solution described herein offers several advantages.

In detail, the present solution enables the determination and monitoring of a tool's 14 wear status 9 solely based on sound data recorded during its operations within a working environment 10. The Applicant notes that using sound data alone enables the establishment of a relationship with tool 14 wear through simple instrumentation.

In addition, the Applicant notes that using graphical representations 6, specifically spectrograms, to determine the tool 14 wear status 9 is an alternative to known solutions. The Applicant further notes that this approach enables particularly precise tool 14 wear analysis by leveraging computer vision techniques.

In detail, it is noted that convolutional neural networks are particularly well-suited for working with graphical representations 6 and specifically with spectrograms. In more detail, the implemented predictive neural model's 7 convolutional neural networks are trained (block 8) for automatically learning spatial hierarchies of features from graphical representations 6, for example beginning with simple elements such as edges and corners at the initial layers. In detail, as the information progresses deeper into a convolutional neural network, these elementary features are synthesized into increasingly complex patterns. In detail, convolutional neural networks are designed to maintain the spatial relationship between objects within an image, preserving the proximity and/or arrangement of pixels. In more detail, this capacity of the convolutional neural networks makes them particularly suitable for performing the task of determining a wear status 9 based on a graphical representation 6. In particular, the Applicant further notes that this capacity enables the interpretation of nuanced changes that might occur in spectrograms due to the wear and tear of drilling equipment, by allowing the tool 14 wear monitoring system 2 to recognize shapes and objects in various orientations and/or sizes.

Moreover, said convolutional neural networks preferably implement pooling layers, configured to reduce the determined feature maps' dimensions and, consequently, the computational burden. The Applicant notes that this dimensionality reduction not only makes the convolutional neural networks more efficient, but also introduces a form of translation invariance, enhancing the predictive neural model's 7 generalization capabilities. In detail, the Applicant further notes that the decision to choose the convolutional neural networks for the predictive neural model 7 reflects a sophisticated strategy for detecting patterns, changes, and anomalies within spectrograms, leveraging the inherent strengths of the convolutional neural networks in processing and interpreting visual data.

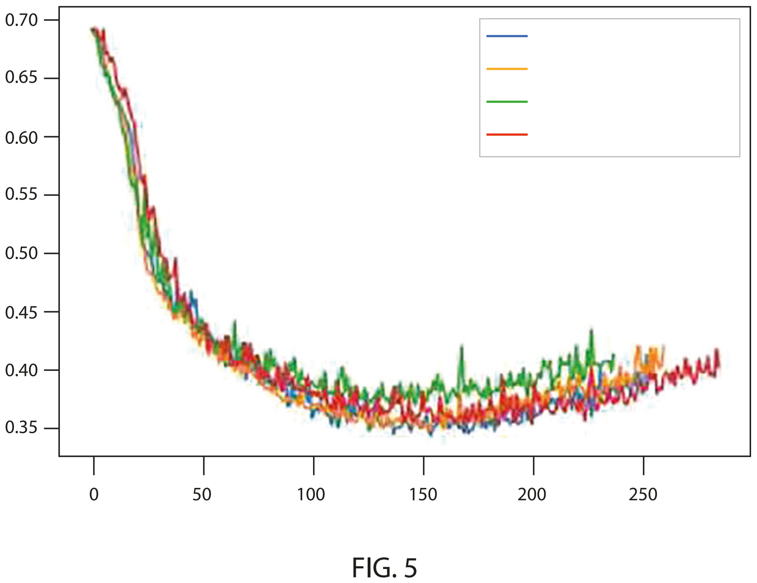

In addition, it is observed that the predictive neural model 7 was tested in various scenarios across different drilling operations, including both controlled and more complex environments. Specifically, scenarios were designed to test the model's ability to handle increased variability and complexity in the data. In detail, the Applicant observes that the performance of the predictive neural network was notable in these tests, demonstrating its capacity to handle multi-source data. Figure 5 shows examples of performance of the predictive neural model 7 of the tool 14 wear monitoring system 2 in determining the wear status 9 of a tool 14 based on a graphical representation 6. The results underscore the predictive neural model's 7 capability to generalize well in more complex scenarios, supporting its potential application in predictive maintenance and fault detection in industrial settings.

## Claims

1. Tool (14) wear status monitoring software (1) being loadable in, and executable by, electronic processing resources and designed to cause, when executed, said electronic processing resources to become configured to:
- receive, from one or more sensors (11) arranged within a working environment (10), one or more acoustic signals indicative of acoustic quantities of a sound caused by the operation of a tool (14) within said working environment (10);
- compute (block 4) a graphical representation (6) of the acoustic quantities of the sound caused by the operation of said tool (14) based on the received acoustic signals indicative of said acoustic quantities;
- determine a wear status (9) of the tool (14) by running a predictive neural model (7) on the computed graphical representation (6); the predictive neural model (7) being trained (block 8) to predict a wear status (9) to be associated to a graphical representation (6) of acoustic quantities of a sound; and
- provide an output based on the determined wear status (9) of the tool (14);
**characterized in that** the tool (14) wear status monitoring software (1) is further designed to cause, when executed, said electronic processing resources to become further configured to:
- determine a number of different tools (14) that have been operating within the working environment (10) based on the received acoustic signals; and
- determine, for each of said different tools (14), a wear status (9) of said tool (14) by applying the predictive neural model (7) on the computed graphical representation (6) of the acoustic quantities of the sound caused by the operation of said tool (14).

2. Tool (14) wear status monitoring software (1) according to claim 1, wherein the computed graphical representation (6) of the acoustic quantities of the sound caused by the operation of the tool (14) is a black-and-white spectrogram representing said acoustic quantities of the sound.

3. Tool (14) wear status monitoring software (1) according to claim 1 or 2, wherein the predictive neural model (7) comprises one or more convolutional neural networks trained (block 8) to extract features from a graphical representation (6) received in input, and to determine a tool's (14) wear status (9), to be associated to said graphical representation (6), based on the extracted features.

4. Tool (14) wear status monitoring software (1) according to claim 3, wherein said predictive neural model's (7) convolutional neural networks are:
- pre-trained on generic datasets to perform one or more generic computer vision tasks; and
- fine-tuned (block 8) to become configured to perform the task of determining a tool's (14) wear status (9) based on a graphical representation (6) by adjusting their weights based on several different graphical representations (6), of acoustic quantities of sounds caused by operating with tools (14) within one or more working environments (10), labelled with corresponding wear statuses (9).

5. Tool (14) wear status monitoring software (1) according to any one of the preceding claims, wherein the predictive neural model comprises:
- several tool-specific predictive neural models; each of said tool-specific predictive neural models being associated to a different tool's (14) type, and being trained on graphical representations of acoustic quantities of sounds caused by the operation of a tool (14) of the type associated to said tool-specific predictive neural model, to become configured to perform the task of determining a wear status (9) of said tool (14); and
- an orchestrator model configured to select one of the several tool-specific predictive neural models based on a graphical representation (6) received in input and representing acoustic quantities of a sound caused by the operation of a tool (14); the orchestrator model being further configured to apply said selected tool-specific predictive neural model on the graphical representation (6) received in input in order to determine the wear status (9) of the tool (14).

6. Tool (14) wear status monitoring software (1) according to any one of the preceding claims, wherein the tool (14) is configured to perform a drilling operation, and wherein the tool (14) wear status monitoring software (1) is designed to cause, when executed, said electronic processing resources to become further configured to:
- determine (block 3B), by executing an audio segmentation algorithm (3) on the received acoustic signals, one or more drilling sound segments (31B) of said acoustic signals; wherein, each of these drilling sound segments (31B) is associated with a different drilling operation of the tool (14) and identifies a sound caused by said associated drilling operation of the tool (14);
- compute (block 4), for each of said determined drilling sound segments (31B), a distinct graphical representation (6) of the acoustic quantities of the sound caused by the tool's (14) drilling operation associated to said drilling sound segment (31B) based on said drilling sound segment (31B); and
- determine the wear status (9) of the tool (14) by applying the predictive neural model (7) on the computed distinct graphical representations (6).

7. Tool (14) wear status monitoring software (1) according to claim 6, wherein the audio segmentation algorithm (3) is designed to cause, when executed, said electronic processing resources to become configured to:
- segment (block 30A) the received acoustic signals into several provisional segments (31A) of the acoustic signals;
- determine, for each of said provisional segments (31A), that a sound activity condition is or is not satisfied based on the acoustic signals' values of said provisional segment (31A); and
- determine (block 3B) the drilling sound segments (31B), associated with different drilling operations of the tool (14), based on the provisional segments (31A) for which the sound activity condition is determined to be satisfied.

8. Tool (14) wear status monitoring software (1) according to claim 7, wherein the audio segmentation algorithm (3) is further designed to cause, when executed, said electronic processing resources to become configured to perform, for each of said provisional segments (31A) for which the sound activity condition is determined to be satisfied, the operations of:
- selecting, from the provisional segments (31A), a number of different contiguous provisional segments (31A) to be merged; said selected contiguous provisional segments (31A) comprising the provisional segment (31A) for which the sound activity condition is determined to be satisfied; and
- computing (block 30B) a drilling sound segment (31B), associated with a drilling operation of the tool (14), by merging said selected provisional segments (31A) to be merged.

9. Tool (14) wear status monitoring system comprising electronic processing resources storing, and configured to execute, the tool (14) wear status monitoring software (1) according to any one of the preceding claims.
